Europäisches Patentamt

European Patent Office

Office européen des brevets

(11) Veröffentlichungsnummer: 0 344 758
A2

## (12) EUROPÄISCHE PATENTANMELDUNG

(21) Anmeldenummer: 89109861.8

(22) Anmeldetag: 31.05.89

(51) Int. Cl.⁴ F16K 31/50

(30) Priorität: 31.05.88 DE 3818529

(43) Veröffentlichungstag der Anmeldung:
06.12.89 Patentblatt 89/49

(84) Benannte Vertragsstaaten:
DE ES FR GB IT

(71) Anmelder: WALU-APPARATETECHNIK GMBH
Lange Strasse 20
D-6980 Wertheim-Grünenwört(DE)

(72) Erfinder: Lutz, Walter
Lange Strasse 20
D-6980 Wertheim-Grünenwört(DE)

(74) Vertreter: Zinnecker, Armin, Dipl.-Ing.
Rechtsanwälte Eduard Lorenz - Dipl.-Ing.
Hans-K. Gossel Dr. Ina Philipps - Dr. Paul B.
Schäuble Dr. Siegfried Jackermeier Dipl.-Ing.
Armin Zinnecker
Widenmayerstrasse 23 D-8000 München
22(DE)

(54) Ventilstempel.

(57) Ein Ventilstempel für ein Ventilgehäuse besitzt einen Ventilstempelkörper (23), der mit dem Ventilgehäuse (11) zusammenwirkende Haltemittel (16, 17) und eine erste Dichtfläche (24) an seinem vorderen Ende aufweist. Um einen derartigen Ventilstempel zu verbessern, ist im Abstand vom vorderen Ende des Ventilstempelkörpers (23) eine zweite Dichtfläche (25) vorgesehen, die mit der Innenfläche des Ventilgehäuses (11) in Anlage bringbar und in radialer Richtung verspannbar (26, 27) ist.

EP 0 344 758 A2

SPREIZDORN
Mat. PPH
22
SICHERUNGSRING 1
Mat. PPH 21   19
18
UEBERWURFMUTTER
Mat. PPH
31
16
17
SICHERUNGSRING 2
Mat. PPH
12
VENTILGEHAEUSE
Mat. GLAS
34
35
VENTILSTEMPEL
Mat. PTFE
23
24   14

33
32
18
28
26 27
25
11
36   15
13

WALU
TECHNIK

HOCHVAKUUM -
VENTILSTEMPEL

## Ventilstempel

Die Erfindung betrifft einen Ventilstempel für ein Ventilgehäuse nach dem Oberbegriff des Anspruchs 1.

In der Praxis sind Ventilstempel bekannt, bei denen das Ventilgehäuse im allgemeinen zylindrisch bzw. kreiszylindrisch ausgestaltet ist. Es ist an seinem oberen Ende offen. Am unteren Ende schließt sich an den kreiszylindrischen Teil des Ventilgehäuses ein konischer Teil an, also ein Teil mit zunehmend kleinerem Durchmesser. Am unteren Ende des konischen Teils befindet sich dann ein rohrförmiger Anschluß. Der Ventilstempel besitzt eine erste Dichtfläche am unteren Ende. Diese ist ebenfalls konisch ausgestaltet, und zwar derart, daß sie mit dem konischen Teil des Ventilgehäuses in dichtende Anlage gebracht werden kann. Die Konus-Winkel des konischen Teils des Ventilgehäuses und der Dichtfläche des Ventilstempelkörpers sind also gleich groß. Weiterhin sind an dem Ventilstempelkörper mit dem Ventilgehäuse zusammenwirkende Haltemittel vorgesehen, um die Dichtfläche zur Anlage bringen zu können und in der Anlagestellung, also dichtenden Stellung, halten zu können. Im allgemeinen bestehen diese Haltemittel aus einer Überwurfmutter, die mit dem Ventilstempelkörper verbunden ist, das Ventilstempelgehäuse übergreift und mit einem Außengewinde an dem Ventilgehäuse verschraubt werden kann. Durch die Verschraubung kann also eine Längsbewegung des Ventilstempelkörpers erzeugt werden, durch die wiederum die Dichtfläche an dem konischen Teil des Ventilgehäuses angepreßt werden kann. Es hat sich gezeigt, daß die Abdichtung mit dem vorbekannten Ventilstempel nicht in allen Anwendungsfällen ausreichend ist.

Ein Ventilstempel nach dem Oberbegriff des Anspruchs 1 ist aus der DE-GM 74 22 685 bekannt. Dieser Ventilstempel besitzt eine erste Dichtfläche an seinem vorderen Ende sowie eine im Abstand vom vorderen Ende des Ventilstempelkörpers angeordnete, zweite Dichtfläche, die an der Innenfläche des Ventilgehäuses anliegt. Bei dem vorbekannten Ventilstempel kann die zweite Dichtfläche aus einem in eine Ringnut eingelegten O-Ring aus Gummi bestehen, der von einer Hülse aus PTFE übergriffen wird. Der O-Ring verformt die Hülse nach außen, so daß dadurch die Dichtfläche erzeugt wird. Die zweite Dichtfläche kann auch aus einer Hülse bestehen, die in situ aus Polypropylen durch Spritzguß hergestellt worden ist, wobei eine nach außen weisende, die zweite Dichtfläche erzeugende Rippe vorhanden ist. In beiden Fällen ist die zweite Dichtfläche ständig vorhanden und ständig in Anlage mit der Innenfläche des Ventilgehäuses. Sie wird lediglich durch ihre Eigenelastizität an die Innenfläche des Ventilgehäuses angepreßt.

Aus der FR-PS 10 35 035 ist ein Ventil bekannt, bei dem ein mit einer konischen Innenfläche versehener Ventilkörper mittels eines konischen Spreizdorns radial verspannbar ist. Durch dieses Verspannung soll der Hauptfluidstrom durch das Ventil abgesperrt werden. Eine zweite Dichtfläche ist nicht vorhanden.

Die Veröffentlichung "IBM tecnical disclosure bulletin, vol. 17, no. 11, p. 3213, Apr. 1975" zeigt ein Ventil mit einer im Ventil stempelkörper vorgesehenen Spindel, die als zweiter Ventilstempel zum Absperren eines zweiten Strömungsweges im Ventilstempelkörper dient. Eine Spreizfunktion wird durch die Spindel nicht ausgeübt.

Aufgabe der Erfindung ist es, einen Ventilstempel für ein Ventilgehäuse nach dem Oberbegriff des Anspruchs 1 zu schaffen, der einfacher und leichter handhabbar ist und zuverlässiger abdichtet.

Erfindungsgemäß wird diese Aufgabe durch die im kennzeichnenden Teil des Anspruchs 1 angegebenen Merkmale gelöst. Die zweite Dichtfläche ist mit der Innenfläche des Ventilgehäuses in Anlage bringbar und in radialer Richtung verspannbar. Der Ventilstempel kann also zunächst in seine Dichtstellung gebracht werden, ohne daß die zweite Dichtfläche dies behindert. Anschließend kann der Ventilstempel mit seiner zweiten Dichtfläche mit dem Ventilgehäuse verspannt und dadurch zusätzlich abgedichtet werden. Weiterhin wird dadurch erreicht, daß die erste Dichtfläche zuverlässig fixiert bleibt und dadurch zuverlässig abdichtet.

Vorteilhafte Weiterbildungen sind in den Unteransprüchen beschrieben.

Vorzugsweise ist die zweite Dichtfläche zylindrisch. Dies bewirkt einen besonders guten Kraftschluß und damit eine besonders gute Abdichtung, und zwar sowohl der zweiten Dichtfläche als auch der ersten Dichtfläche.

Vorzugsweise weist der Ventilstempelkörper im Bereich der zweiten Dichtfläche eine konische Innenfläche auf, mit der das vordere, konische Ende eines Spreizdornes derart zusammenwirkt, daß die zweite Dichtfläche durch eine Längsbewegung des Spreizdornes radial verspannbar ist. Die Verspannung der zweiten Dichtfläche wird also durch die Keilwirkung des vorderen, konischen Endes des Spreizdornes bewirkt. Diese Ausgestaltung ist besonders raumsparend und einfach herzustellen.

Die Spannwirkung wird noch verbessert, wenn sich eine weitere, vorzugsweise zylindrische, Innenfläche an die konische Innenfläche des Ventilstempelkörpers anschließt. Hierdurch wird eine zusätzliche Elastizität im Bereich der zweiten Dichtfläche geschaffen, die die Verspannungswirkung und damit die Dichtwirkung verbessert.

Vorzugsweise weist der ventilstempelkörper ein Innengewinde auf, in dem ein Außengewinde des Spreizdornes verschraubbar ist. Die Längsbewegung des Spreizdornes, die über die Keilwirkung des Konus am vorderen Ende des Spreizdornes die Verspannung der zweiten Dichtfläche bewirkt, wird also durch eine Drehbewegung des Spreizdornes erzeugt. Auch hierdurch wird eine besonders raumsparende, einfache und kostengünstige Ausgestaltung bewirkt

Vorzugsweise ist das Innengewinde des Ventilstempelkörpers bzw. das Außengewinde des Spreizdornes selbsthemmend. Hierdurch wird eine versehentliche Lösung der Verspannung der zweiten Dichtfläche mit Sicherheit vermieden.

Der Ventilstempelkörper kann mit einer das Ventilgehäuse übergreifenden, mit dem Ventilgehäuse verschraubbaren Überwurfmutter verbunden sein. Durch diese Überwurfmutter kann also der Ventilstempelkörper mit dem Ventilgehäuse verschraubt werden, bis die erste Dichtfläche am vorderen Ende des Ventilstempelkörpers am konischen Teil des Ventilgehäuses anliegt. Anschließend kann dann über den Spreizdorn die zweite Dichtfläche verspannt werden.

Die Überwurfmutter kann an ihrem unteren Ende einen nach innen vorspringenden Sicherungsring aufweisen, um zu verhindern, daß sie vollständig von dem Ventilgehäuse gelöst wird. Durch diese Ausgestaltung ist also die Überwurfmutter unverlierbar.

Vorzugsweise weist die Überwurfmutter an ihrem oberen Ende eine von einem Absatz und einen Sicherungsring gebildete, radiale Nut auf, in die ein radialer Vorsprung am oberen Ende des Ventilstempelkörpers eingreift. Hierdurch ist der Ventilstempelkörper auf besonders einfache Weise mit der Überwurfmutter verbunden.

Vorzugsweise ist die ersten Dichtfläche des Ventilstempelkörpers konisch ausgebildet.

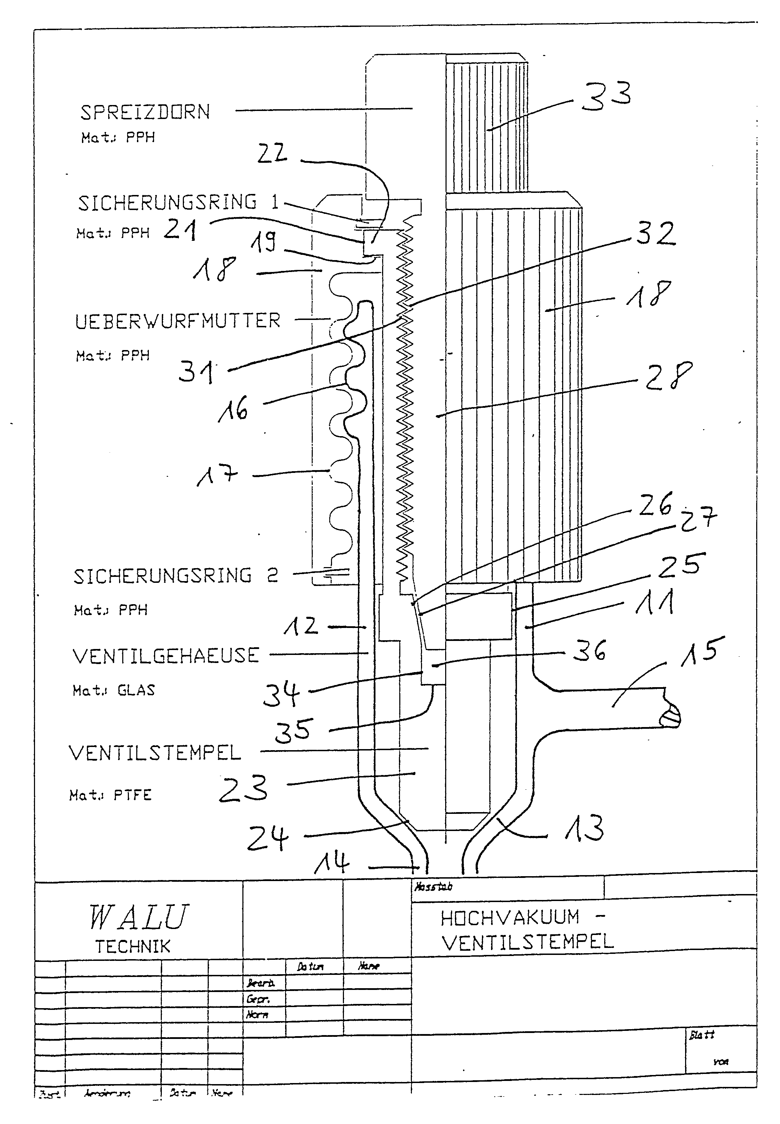

Ein Ausführungsbeispiel der Erfindung wird nachstehend anhand der beigefügten Zeichnung im einzelnen beschrieben. In der Zeichnung zeigt die einzige Figur ein Ausführungsbeispiel der Erfindung in einer Seitenansicht, teilweise im Schnitt.

In der Zeichnung ist der Hochvakuum-Ventilstempel in der rechten Hälfte in einer Ansicht gezeichnet, während die linke Hälfte einen Schnitt zeigt. Das Ventilgehäuse 11 besitzt einen oberen, zylindrischen Teil 12, an dem sich ein konischer Teil 13 anschließt. Am unteren Ende geht dieser konische Teil 13 in ein Anschlußrohr 14 über. Rechts ist ein weiteres Anschlußrohr 15 zu sehen.

Das Ventilgehäuse 11 besitzt am oberen Ende ein Außengewinde 16, in welches das Innengewinde 17 einer Überwurfmutter 18 eingreift. Am unteren Ende der Überwurfmutter 18 ist ein nach innen vorspringender Sicherungsring 2 vorgesehen, der ein vollständigen Herausdrehen der Überwurfmutter verhindert; die Überwurfmutter 18 ist also unverlierbar. Weiterhin besitzt die Überwurfmutter 18 an ihrem oberen Ende eine von einem Absatz 19 und einem Sicherungsring 1 gebildete, radiale Nut 21, in die ein radialer Vorsprung 22 des Ventilstempelkörpers 23 eingreift.

Der Ventilstempelkörper weist eine erste Dichtfläche 24 an seinem vorderen Ende auf, die konisch ausgestaltet ist und die mit dem konischen Teil 13 des Ventilgehäuses in Anlage bringbar ist. Weiterhin besitzt der Ventilstempelkörper 23 eine zweite Dichtfläche 25, die zylindrisch ausgestaltet und mit der Innenfläche des Ventilgehäuses 11 in Anlage bringbar ist. Die zweite Dichtfläche 25 ist im Abstand von der ersten Dichtfläche 24 angeordnet. Zwischen den beiden Dichtflächen befindet sich der Rohranschluß 15 des Ventilgehäuses 11.

Der Ventilstempelkörper 23 weist im Bereich der zweiten Dichtfläche 25 eine konische Innenfläche 26 auf, mit der das vordere, konische Ende 27 eines Spreizdornes 28 derart zusammenwirkt, daß die zweite Dichtfläche 25 durch eine Längsbewegung des Spreizdornes 28 radial verspannbar ist. Der obere Teil des Ventilstempelkörpers 23 trägt ein Innengewinde 31, in welches ein Außengewinde 32 des Spreizdornes 28 eingreift. Am oberen Ende des Spreizdornes 28 befindet sich ein Griffstück 33, mit dem eine Drehbewegung von Hand in den Spreizdorn 28 eingeleitet werden kann. Die beiden Gewinde 31 und 32 sind selbsthemmend. An die konische Innenfläche 26 des Ventilstempels 23 schließt sich eine weitere, zylindrische Innenfläche 34 an. Die Bohrung in dem Ventilstempelkörper 23 endet also in einem Sackloch 35. Der an die konische Fläche 26 anschließende, freie, zylindrische Raum 36 bewirkt eine zusätzliche Elastizität, die die Verspannungswirkung der beiden konischen Flächen 26 und 27 noch zusätzlich erhöht.

Im Betrieb wird zunächst die Überwurfmutter 18 mit deren Innengewinde 17 mit dem Außengewinde 16 des Ventilgehäuses 11 verschraubt. Die dadurch hervorgerufene Abwärtsbewegung der Überwurfmutter 18 wird über die Nut 21 und den Bund 22 auf den Ventilstempelkörper 23 übertragen. Der Ventilstempelkörper 23 wird verschraubt, bis er mit seiner ersten Dichtfläche 24, also der konischen Fläche am vorderen Ende, an der konischen Innenfläche 13 des Ventilgehäuses 11 anschlägt. Der Ventilstempel dichtet dann ab. Zur weiteren Abdichtung und Sicherung wird dann der Spreizdorn 28 an seinem Griffstück 33 gedreht. Der Spreizdorn 28 wird also mit seinem Außengewinde 32 in das Innengewinde 31 des Ventilstempelkörpers 23 eingeschraubt. Durch diese Längsbewegung des Spreizdornes 28 wird die zweite, zylindrische Dichtfläche 25 des Ventilstempelkörpers durch die Keilwirkung der beiden Keilflächen 26 und 27 radial nach außen bewegt. Die zweite Dichtfläche 25 wird also an die Innenfläche des Ventilgehäuses 11 gepreßt.

## Ansprüche

1. Ventilstempel für ein Ventilgehäuse mit einem Ventilstempelkörper (23), der mit dem Ventilgehäuse (11) zusammenwirkende Haltemittel (16, 17), eine erste Dichtfläche (24) an seinem vorderen Ende und im Abstand vom vorderen Ende des Ventilstempelkörpers (23) eine zweite Dichtfläche (25) aufweist,
**dadurch gekennzeichnet,**
daß die zweite Dichtfläche (25) mit der Innenfläche des Ventilgehäuses (11) in Anlage bringbar und in radialer Richtung verspannbar ist.

2. Ventilstempel nach Anspruch 1, dadurch gekennzeichnet, daß die zweite Dichtfläche (25) zylindrisch ist.

3. Ventilstempel nach Anspruch 1 oder 2, dadurch gekennzeichnet, daß der Ventilstempelkörper (23) im Bereich der zweiten Dichtfläche (25) eine konische Innenfläche (26) aufweist, mit der das vordere, konische Ende (27) eines Spreizdornes (28) derart zusammenwirkt, daß die zweite Dichtfläche (25) durch eine Längsbewegung des Spreizdornes (28) radial verspannbar ist.

4. Ventilstempel nach Anspruch 3, dadurch gekennzeichnet, daß sich eine weitere, vorzugsweise zylindrische, Innenfläche (34) an die konische Innenfläche (26) des Ventilstempelkörpers (23) anschließt.

5. Ventilstempel nach Anspruch 3 oder 4, dadurch gekennzeichnet, daß der Ventilstempelkörper (23) ein Innengewinde (31) aufweist, in dem ein Außengewinde (32) des Spreizdornes (28) verschraubbar ist.

6. Ventilstempel nach Anspruch 5, dadurch gekennzeichnet, daß das Innengewinde (31) und das Außengewinde (32) selbsthemmend ist.

7. Ventilstempel nach einem der vorhergehenden Ansprüche, dadurch gekennzeichnet, daß der Ventilstempelkörper (23) mit einer das Ventilgehäuse (11) übergreifenden, mit dem Ventilgehäuse (11) verschraubbaren (16 17) Überwurfmutter (18) verbunden ist.

8. Ventilstempel nach Anspruch 7, dadurch gekennzeichnet, daß die Überwurfmutter (18) an ihrem unteren Ende einen nach innen vorspringenden Sicherungsring (2) aufweist.

9. Ventilstempel nach Anspruch 7 oder 8, dadurch gekennzeichnet, daß die Überwurfmutter (18) an ihrem oberen Ende eine von einem Absatz (19) und einem Sicherungsring (1) gebildete, radiale Nut (21) aufweist, in die ein radialer Vorsprung (22) am oberen Ende des Ventilstempelkörpers (23) eingreift.

10. Ventilstempel nach einem der vorhergehenden Ansprüche, dadurch gekennzeichnet, daß die erste Dichtfläche (24) des Ventilstempelkörpers (23) konisch ausgebildet ist.

EP 0 344 758 A2

SPREIZDORN
Mat.: PPH

33

22

SICHERUNGSRING 1
Mat.: PPH  21
19
18

32

18

UEBERWURFMUTTER
Mat.: PPH

31

16

28

17

26 27

25

11

SICHERUNGSRING 2
Mat.: PPH

12

36

15

VENTILGEHAEUSE
Mat.: GLAS

34

35

VENTILSTEMPEL
Mat.: PTFE

23

24

13

14

WALU
TECHNIK

Massstab

HOCHVAKUUM -
VENTILSTEMPEL

Datum  Name
Bearb.
Gepr.
Norm

Blatt

von

Zust  Änderung  Datum  Name